# EUROPEAN PATENT APPLICATION

(11) **EP 0 798 672 A2**
(43) Date of publication of application: **01.10.1997**
(21) Application number: 97302081.1
(22) Date of filing: 26.03.1997
(51) Int. Cl.: G07F 7/08

(54) **Electronic settlement method employing electronic money value with identifier and system for use in such a method**

(30) Priority: 29.03.1996 JP 103516/96
(71) Applicant: HITACHI, LTD., Chiyoda-ku, Tokyo 101 (JP)
(72) Inventor: Ikeda, Kazuyuki, Kokubunji-shi (JP); Tomita, Hiroshi, Miyamea-ku, Kawasaki-shi (JP); Tasaka, Mitsunobu, Aoba-ku, Yokohama-shi (JP); Nitta, Jun, Aoba-ku, Yokohama-shi (JP)
(74) Representative: Hackney, Nigel John

(57) **Abstract**

In an electronic settlement system employing a holding unit (200) for holding electronically an electronic money value, even if the holding unit is damaged, it is insured that the electronic money value which the holding unit held can be confirmed. In addition, in that assurance, the unjust report is prevented from being carried out. Furthermore, in that assurance, it is an object to insure the anonymousness as well which is a merit of cash. In order to attain that object, in the holding unit for holding the electronic money value, the electronic money value is held with the electronic money value being divided into one or more groups, and unique identifiers are assigned to the groups, respectively. In addition, when transferring, in the settlement operation, the necessary electronic money value having the identifier assigned thereto to another holding unit, the electronic money value is transferred together with the identifier. Furthermore, the above-mentioned holding unit holds both the electronic money values having the identifiers assigned thereto and the electronic money values each having no identifier assigned thereto with those electronic money values being mixed with each other.

## Description

The present invention relates in general to a settlement system employing an electronic money value which can be held electronically, and more particularly to an electronic settlement method employing an electronic money value having an identifier assigned thereto and a system for use in such a method.

For a settlement system employing an electronic value which is electronically held, there has been widely proposed a method wherein an electronic money value is held in an IC card.

For example, "A GOLD NOTE IC CARD" disclosed in JP-A-62-227695 is such that a desired product is purchased from an automatic vending machine using an IC card, and includes memory means for storing an electronic money value representing the balance in the IC card and communication means for communicating with the automatic vending machine. At the time when inserting the IC card into the automatic vending machine, the communication state is established between the automatic vending machine and the IC card by the communication means, and the automatic vending machine charges the IC card for the price of the product and then the IC card stores an amount, which is obtained by subtracting the price of the product from the balance, as the newest electronic money value in the memory means. That is, the data relating to the amount, which has been obtained by subtracting the price of the product from the balance and is stored in the memory means of the IC card, is transferred to the automatic vending machine side.

In addition, "AN ELECTRONIC SMALL AMOUNT SETTLEMENT SYSTEM" disclosed in JP-A-7-85171 includes a card for holding an electronic money value, a host computer which a manager of the ELECTRONIC SMALL AMOUNT SETTLEMENT SYSTEM possesses, and an intermediation device connected to the host computer for updating the electronic money value which the card holds. At the time when inserting the card into the intermediation device, the intermediation device charges the card for the price of a product. The intermediation device informs, after having updated the electronic money value which the card holds (i.e., after having withdrawn the price of the product), the host computer of the updated information. By applying this technology, for all the cards used in the above-mentioned ELECTRONIC SMALL AMOUNT SETTLEMENT SYSTEM, the manager can collectively manage the electronic money values which all the cards hold, respectively, using the host computer.

In the prior art as described above, there are following problems.

Firstly, in the case of the method of the GOLD NOTE IC CARD disclosed in JP-A-62-227695, when the IC card is damaged, the balance in the IC card becomes obscure. As a result, since the manager of the GOLD NOTEe IC CARD can not pay the balance back to the possessor of the GOLD NOTE IC CARD in such a way as to reissue the electronic money value corresponding to the balance in the IC card to the possessor of the IC card, the possessor of the IC card loses the funds corresponding to the above-mentioned balance. However, the IC card possessor can not be convinced that the funds corresponding to the balance in the IC card are lost due to the damage of the IC card.

In addition, in the case of the method of the ELECTRONIC SMALL AMOUNT SETTLEMENT SYSTEM disclosed in JP-A-7-85171, since the manager grasps the updating situations of the individual cards, even if the card is damaged, then the balance in the card becomes clear. Therefore, the manager can pay the electronic money value corresponding to the balance in the card back to the card possessor. However, since the manager can grasp even the private information, such as the balance in the card, the amount of paid money and the object of the payment, which does not want to be known to a third party to the card possessor, it is not preferable in terms of that the feature as the anonymousness with which the cash is essentially provided is lost.

In the light of the foregoing problems associated with the prior art, preferably the present invention provides an electronic settlement method and a system for use in such a method which are capable of confirming, irrespective of the state (such as damage) of holding means such as an IC card for holding an electronic money value, the electronic money value which the holding means holds. referably, it is a second object of the present invention to maintain the anonymousness with which the hard cash is essentially provided in the above-mentioned method and system.

Preferably, in order to attain the above-mentioned objects, the present invention is designed in the following manner. That is, unique identifiers are respectively assigned to one or more groups of electronic money values which are obtained by dividing the original electronic money value and which can be electronically held. Then, the groups of electronic money values which are obtained by the division are made correspond to the identifiers. In addition, when transferring the electronic money value in buying and selling of a product or the like, the electronic money value obtained by the division is transferred together with the identifier assigned thereto (even if a time lag in transfer occurs between the electronic money value and its identifier, it is not cared).

Any identifier is available as long as the electronic money value obtained by the division is uniquely determined and it may be issued from any portion. The identifier may be assigned and managed by a management organ which ensures that when a holding unit, such as an IC card, for holding an electronic money value was damaged, the electronic money value which was held by the holding unit thus damaged is reissued. As for the management organ, for example, the Mint Bureau, a bank or an insurance company for producing an electronic money value is considered. In addition, the electronic money values may also be issued from the holding unit. In this case, there is also the possibility that the same two or more identifiers may be issued. In order to avoid this problem, the identifier may be issued as follows. The identifier is divided into two or more parts and at least one part thereof is given information for specifying the holding unit. For example, an account number of the possessor of the IC card may be available for that information. In addition, in the present invention, when transferring the electronic money value to another (e.g., from a certain holding unit to another holding unit), the electronic money value of interest is transferred together with the identifier corresponding to that electronic money value. As a result, the evidence that the electronic money value to which the identifier is assigned was used by the payment side person is left in the reception side. Therefore, it is possible to prevent a malicious utilizer who damages intentionally, after having transferred the electronic money value, his/her own holding unit and makes an application for "please, reissue the electronic money value since I do not yet use the electronic money value" from coming out.

In addition, when transferring the electronic money value in the payment operation or the like, if the amount of settlement is smaller than the lowest amount of electronic money value which was obtained by the division and which the payment side person has, then the following procedure is adopted. The electronic money value which the payment side person has is redivided into the amount of settlement and the information other than the amount of settlement. Then, the electronic money value corresponding to the amount of settlement is transferred. In addition, when the electronic money value to be redivided has the identifier assigned thereto, information is added to that identifier so as to obtain an identifier for demonstrating clearly that the electronic money value of interest is the redivided electronic money value. For example, information such as numerical characters is added to the identifier before the redivision. When carrying out the redivision, the original electronic money value may be erased from the holding unit.

When transferring the electronic money value in the payment operation or the like, as for another procedure of coping with the situation when the amount of settlement is smaller than the lowest amount of electronic money value which was obtained by the division and which the payment side person has, the following procedure is adopted. That is, the electronic money value is transferred from the payment side person to the reception side person, and then the difference between the amount of settlement and the electronic money value thus transferred is returned from the reception side person back to the payment side person.

In addition, for the holding unit for holding electronically the electronic money values, the electronic money values to which the identifiers are respectively assigned may be mixed with the electronic money values to each of which no identifier is assigned. The possessor of the holding unit uses the electronic money value to which the identifier is assigned, whereby that possessor can obtain the guarantee that the electronic money value which the holding unit holds can be confirmed irrespective of the state (damage or the like) of the above-mentioned holding unit. On the other hand, the electronic money value to which no identifier is assigned is used, whereby it is possible to obtain the anonymousness with which the cash is essentially provided.

Furthermore, the information which represents the right possessor of the holding unit is transferred together with the electronic money value. In such a way, the traveler's check function is electronically realized. For this reason, since it is possible to judge whether or not the payment side person himself/ herself has used the electronic money value to which the identifier is assigned, it is possible to prevent a malicious utilizer from coming out.

The above and other objects as well as advantages of the present invention will become clear by the following description of the preferred embodiments of the present invention with reference to the accompanying drawings, wherein:
Fig. 1 is a schematic view showing the structure of an IC card of the present invention;
Fig. 2 is a block diagram showing a configuration of an on-line system between a cash dispenser and a center apparatus;
Fig. 3 is a flow chart showing the procedure of dividing an electronic money value and the procedure of assigning an identifier thereto which are executed by the cash dispenser;
Fig. 4 is a schematic view showing the situations of the IC card and an account of the center apparatus before update;
Fig. 5 is a schematic view showing the situations of the IC card and an account of the center apparatus after update;
Fig. 6 is a block diagram showing a configuration of a terminal unit through which the electronic money value is transmitted between the IC cards;
Fig. 7 is a flow chart showing the settlement procedure executed by the terminal unit through which the electronic money value is transmitted between the IC cards;
Fig. 8 is a flow chart showing the procedure of inspecting the electronic money value with the used identifier which procedure is executed by the cash dispenser;
Fig. 9 is a block diagram showing a method wherein if the electronic money value with the identifier is transferred, then the same identifier is added to both the payment side and the reception side;
Fig. 10 is a block diagram showing a method wherein if the electronic money value with the identifier is transferred, then the electronic money value with no identifier is transferred to the payment side;
Fig. 11 is a block diagram showing a method wherein an identifier is assigned to the electronic money value representing a minimum unit of currency;
Fig. 12 is a block diagram showing a method wherein a plurality of identifiers are held in the electronic money value;
Fig. 13A is a schematic view showing the structure of an IC card which is provided with the function of obtaining hysteresis;
Fig. 13B is a schematic view showing the structure of a first example of the IC card on which the fund information is printed;
Fig. 13C is a schematic view showing the structure of a second example of the IC card on which the fund information is printed;
Fig. 14 is a schematic view showing the structure of an IC card with a traveler's check function;
Fig. 15 is a block diagram showing a configuration of an example of a terminal unit with a traveler's check function;
Fig. 16 is a flow chart showing the settlement procedure executed by the terminal unit with the traveler's check function;
Fig. 17 is a flow chart showing the settlement procedure executed by a cash dispenser for mixing the electronic money values having the identifiers with the electronic money values each having no identifier;
Fig. 18 is a flow chart showing the order of priority of the electronic money values which are selected in the settlement operation;
Fig. 19 is a flow chart showing the procedure of collecting the electronic money value which has the identifier and which is already used which procedure is executed by the cash dispenser;
Fig. 20 is a flow chart showing how to assign an identifier when reissuing the electronic money value;
Fig. 21A is a block diagram showing a configuration of a first example of a terminal unit other than the terminal unit 300 shown in Fig. 6;
Fig. 21B is a block diagram showing a configuration of a second example of a terminal unit other than the terminal unit 300 shown in Fig. 6; and
Fig. 22 is a perspective view showing the external appearance of the cash dispenser 100.

The preferred embodiments of the present invention will hereinafter be described in detail with reference to the accompanying drawings.

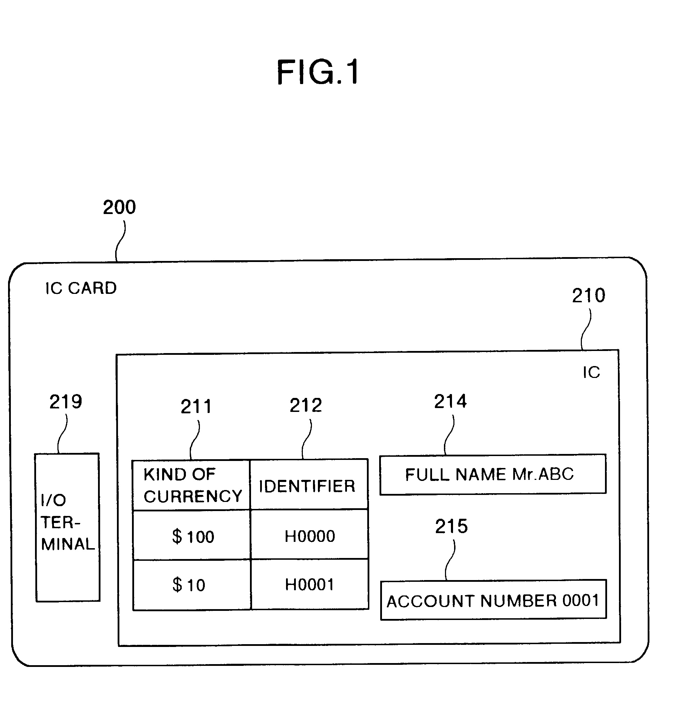

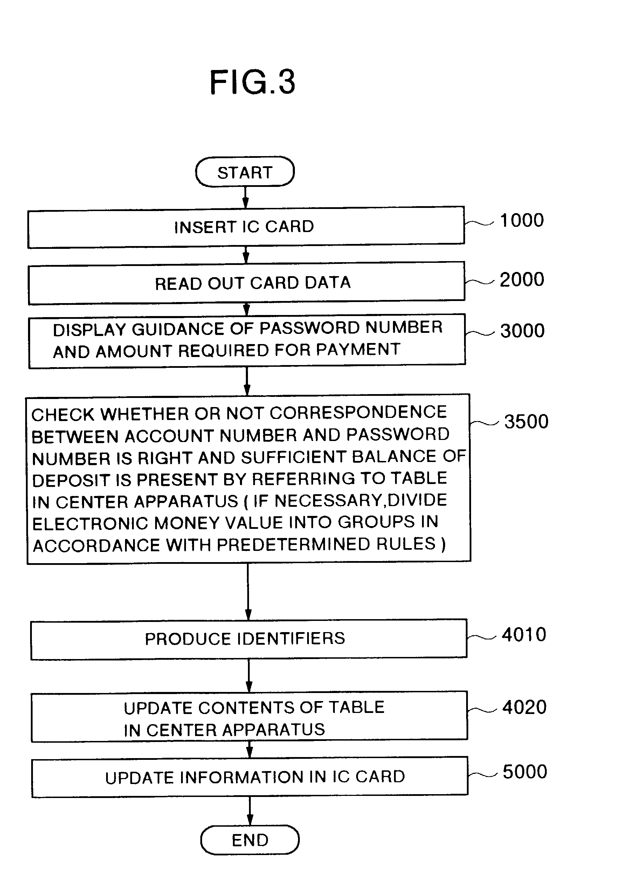

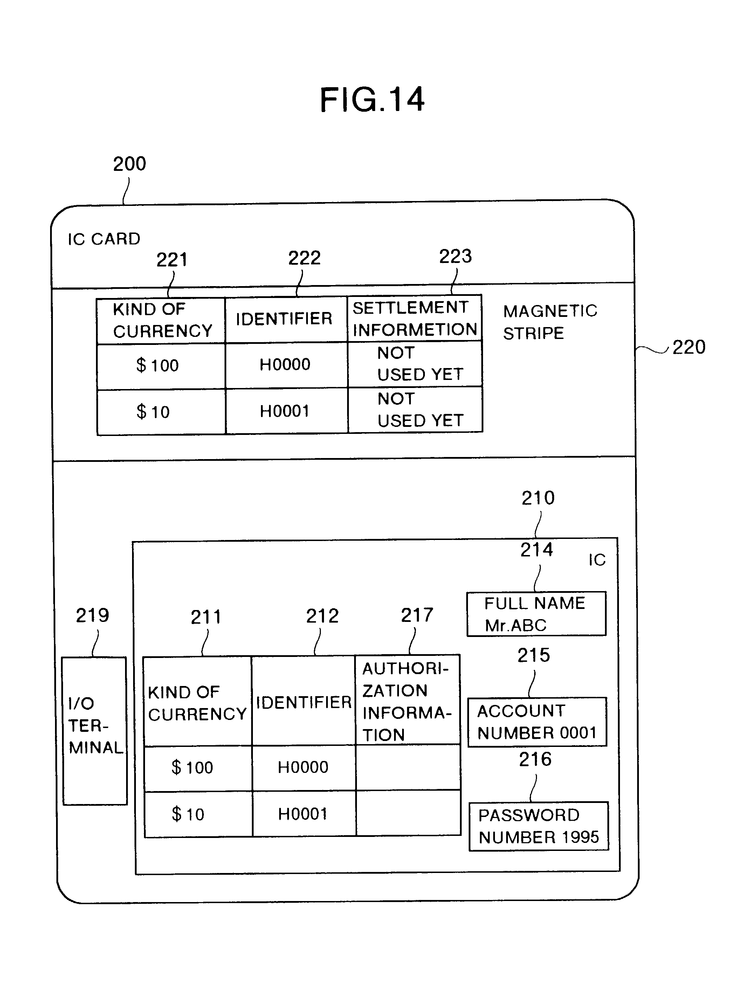

Referring first to Fig. 1, an IC card 200 is shown as an example of holding means for holding therein an electronic money value. In Fig. 1, reference numeral 210 designates an IC which is embedded in the IC card 200. The electronic money value is held in the IC 200 in such a way that the electronic money value is divided into one or more groups and unique identifiers for identifying the respective groups are assigned to the respective groups of electronic money values. In this connection, the reason of employing the word of "group" is that each electronic money value has a plurality of items such as "kind of currency", "identifier" and "authorization information (refer to Fig. 14)". The identifier is assigned to $100 itself. While how to divide the electronic money value into one or groups is arbitrarily determined by a utilizer when writing the information relating to the funds into the IC card 200, this will be described later with reference to Fig. 3. Reference numeral 211 designates an area for a kind of currency representing values with which the electronic money value is divided into groups. In this case, the electronic money value is divided into the groups with the values of $100 and $10. Reference numeral 212 designates an area for an identifier representing identifiers which are uniquely assigned to the groups (uniquely assigned to the whole groups including the groups in IC cards of other utilizers as well as in this IC card 200). In this case, the identifier of H0000 and the identifier of H0001 are assigned to the group of $100 and the group of $10, respectively, so as to be held in the IC card 200. Reference numeral 214 designates an area for a full name showing a possessor of the IC card, and reference numeral 215 designates an account number area showing an account in the associated bank which a possessor of the IC card possesses. In addition, reference numeral 219 designates an I/O terminal through which the information stored in the IC card 200 inserted into the terminal unit such as a cash dispenser is read out or written from or to the IC card 200.

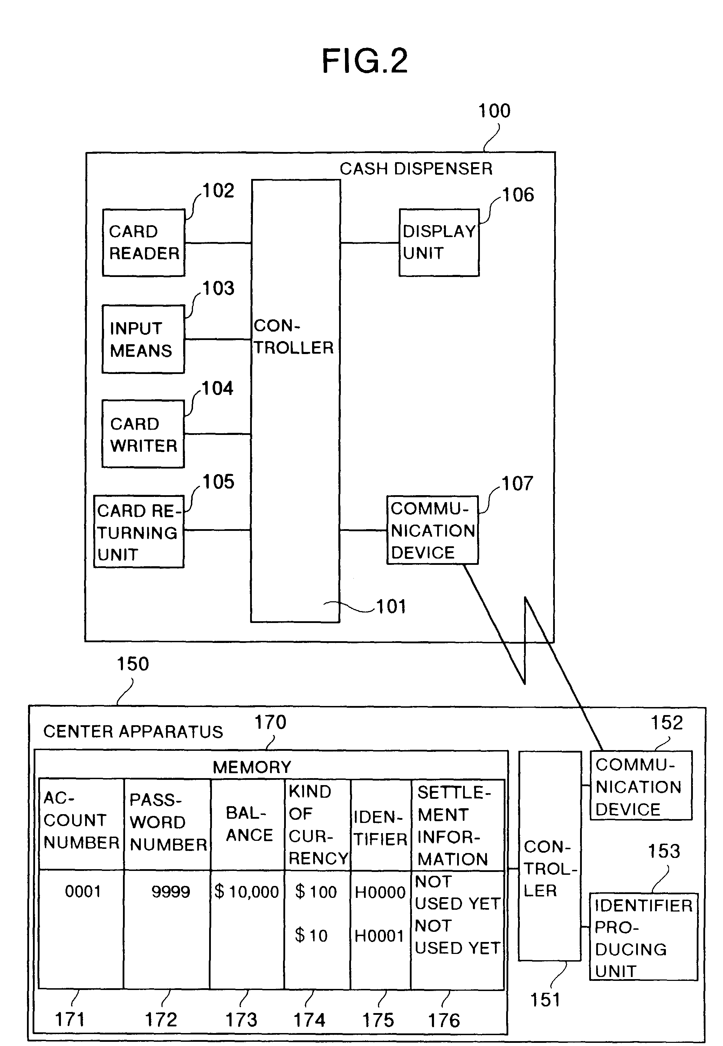

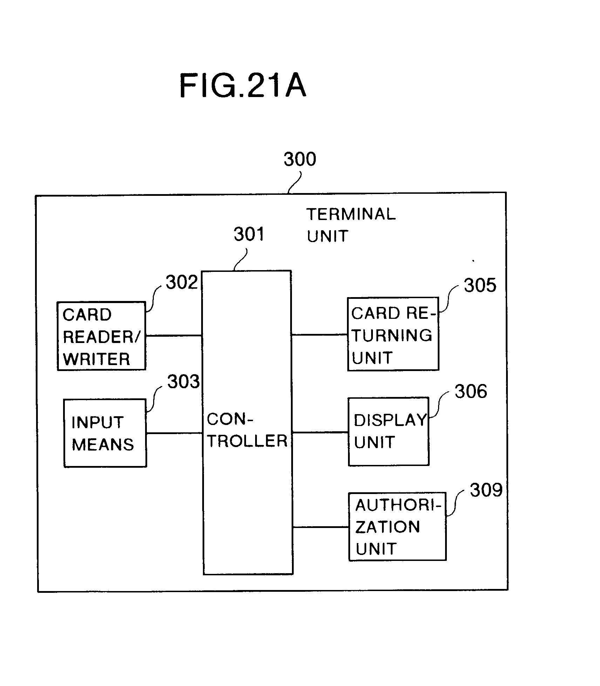

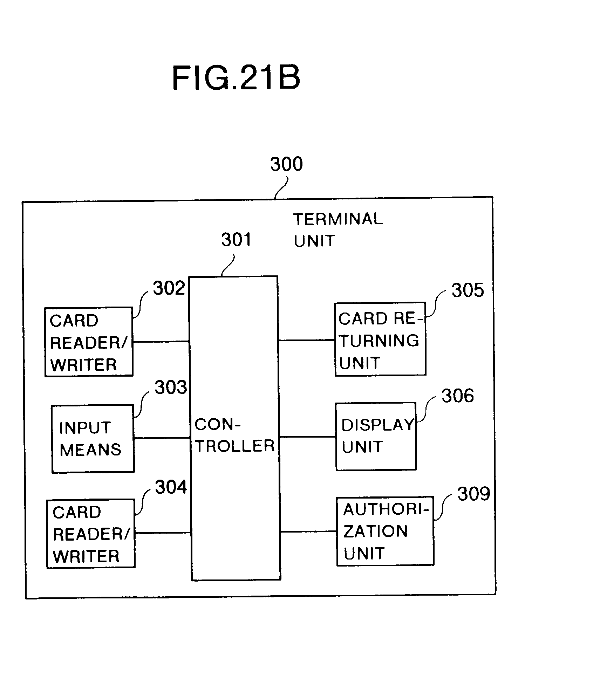

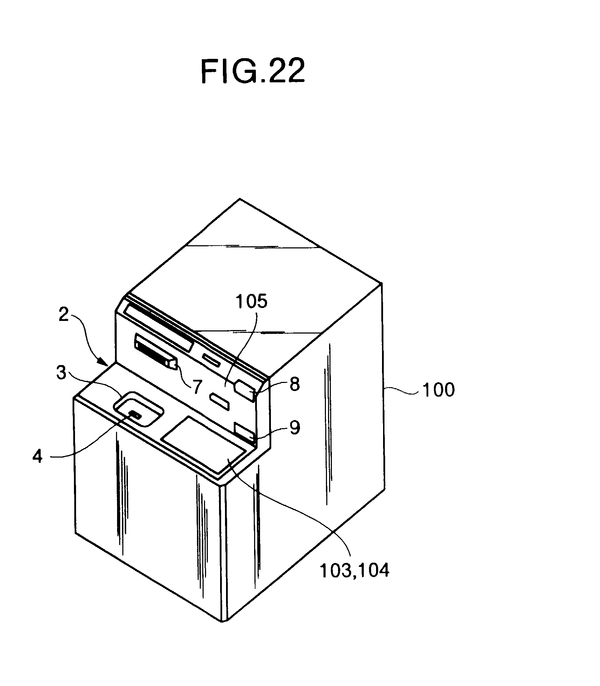

Fig. 2 is a block diagram showing a configuration of an on-line system between a cash dispenser and a center apparatus in the case where the present invention is applied to a cash dispenser in the on-line system. In addition, Fig. 22 is a perspective view showing the external appearance of a cash dispenser. In Fig. 2, reference numeral 100 designates a cash dispenser (which is installed in each of branches of a bank, and the like for example). In this cash dispenser 100, reference numeral 102 designates a card reader for reading out the data such as an account number 215 recorded in the IC card 200 which is inserted into a card insertion port 105 (illustrated in only Fig. 22) of the cash dispenser 100 through the I/O terminal 219 of the IC card 200 of interest. Reference numeral 103 designates input means such as a keyboard through which a utilizer inputs the data relating to a amount of money. The input means may be, as shown in Fig. 22, integrated with a display unit. Reference numeral 104 designates a card writer for updating the data recorded in the IC card 200 through the I/O terminal 219. Reference numeral 103 designates a keyboard through which a password number and the amount required for payment are inputted by a utilizer. Reference numeral 106 designates a display unit for displaying the operation procedure and the instruction guidance for a utilizer on its display window. Reference numeral 105 designates a card returning unit for returning an IC card to a utilizer through a return port. In this case, the card returning unit 105 is also used as the insertion port. Alternatively, instead thereof, the dedicated insertion port and the dedicated card returning unit (return port) may be provided independently of each other. In addition, the two sheets of IC cards 200A and 200B which have been inserted into the card insertion port 105 may be used (two sheets of IC cards can be inserted at the same time). Reference numeral 101 designates a controller for managing the operation of fetching the data from those units, the recording operation, the inspection operation and the control of the operation of those units so as to control the operations of the above-mentioned units in accordance with a program stored therein. In addition, in Fig. 2, the card reader 102 is provided independently of the card writer 104 in terms of mechanism. Alternatively, however, as in a terminal unit 300 shown in Fig. 21, a reader/writer (R/W) which is used as the card reader as well as the card writer may be available.

Reference numeral 150 designates a center apparatus (which is installed in the main office of a bank for example). In this center apparatus 150, reference numeral 170 designates a memory. In the memory 170, there are provided: an account number area 171 showing, to a customer who has an account in a bank, an account number which the customer possesses; a password number area 172 showing thereto a password number corresponding to the account; a balance area 173 showing thereto the balance of a deposit in the account; a currency kind area 174 showing thereto the groups of electronic money values issued to the IC card 200 which the customer possesses; an identifier area 175 showing identifiers which are respectively assigned to the groups; and a settlement information area 170 showing whether or not the electronic money value in the group is transferred to an IC card of another person or the like to be applied to the settlement. In this case, the groups of electronic money values having $100 and $10 obtained by division are issued to the IC card 200 which corresponds to the account number 0001 and which a customer possesses, the identifier of H0000 and the identifier of H0001 are respectively assigned to the groups, and the fact that both the two groups are not used yet is shown by the settlement information of "not used yet". Reference numeral 153 designates an identifier producing unit for producing unique identifiers. Reference numeral 151 designates a controller for managing the control of the operations of those units. Reference numerals 107 and 152 designate respectively communication devices through which the cash dispenser 100 communicates with the center apparatus 150.

Fig. 3 is a flow chart showing the procedure of inserting the IC card 200 shown in Fig. 1 into the cash dispenser 100 shown in Fig. 2 in order to transfer the electronic money value from an account of a utilizer to the IC card 200 (corresponding to the procedure of withdrawing cash from an account). More specifically, Fig. 3 shown the procedure of dividing electronic money value which the Ic card 200 holds into groups, and the procedure of assigning the identifiers to the groups obtained by the division. The description will hereinbelow be given with respect to the operations of the units shown in Figs. 1, 2 and 22 on the basis of the flow chart of Fig. 3.

Firstly, when a utilizer inserts his/her own IC card 200 shown in Fig. 1 into the predetermined insertion port 105 of the cash dispenser 100 (Step 1000), the card reader 102 reads out the card data through the I/O terminal 219 (Step 2000). As shown in Fig. 1, the kind of currency 211, the indentifier 212, the full name 214, and the account number 215 are previously recorded as the card data in the IC card 200. Thereafter, the card data which has been read out is fetched in the controller 101 in order to be inspected therein. This inspection is, for example, to check whether or not the account number is nullified due to robbery or loss of the IC card, i.e., to check the justness of the card data. If the card data is judged to be right on the basis of the inspection, then the guidance of "please set a password number, the amount required for payment and the values for division to groups" is displayed on the display unit 106 (Step 3000).

In accordance with that guidance, the utilizer operates the input means 103 in order to set the password number, the paid sum of money and the values for division to groups. The values with which the electronic money value is divided into groups are either determined arbitrarily or set in accordance with predetermined rules. For example, a plurality kinds of values are determined in such a way that when the payment is carried out with those values, the number of electronic money values become the smallest. In addition, the procedure may also be adopted in which how to pay the money in accordance with the predetermined rules is displayed in order to ask the utilizer whether or not the change is carried out. In this case, the method about the change is inputted by the utilizer. If the above-mentioned information is set, then it is checked whether or not the password number is right and also the amount required for payment exceeds the balance of a deposit (Step 3500). If the password number is right and also the sufficient balance of a deposit is present, then the unique identifiers are produced for the groups by using the identifier producing unit (Step 4010), the contents of the table in the center apparatus 150 are updated (Step 4020) and then the data in the IC card 200 is updated (Step 5000). Then, the IC card 200 is returned back to the utilizer through the return port.

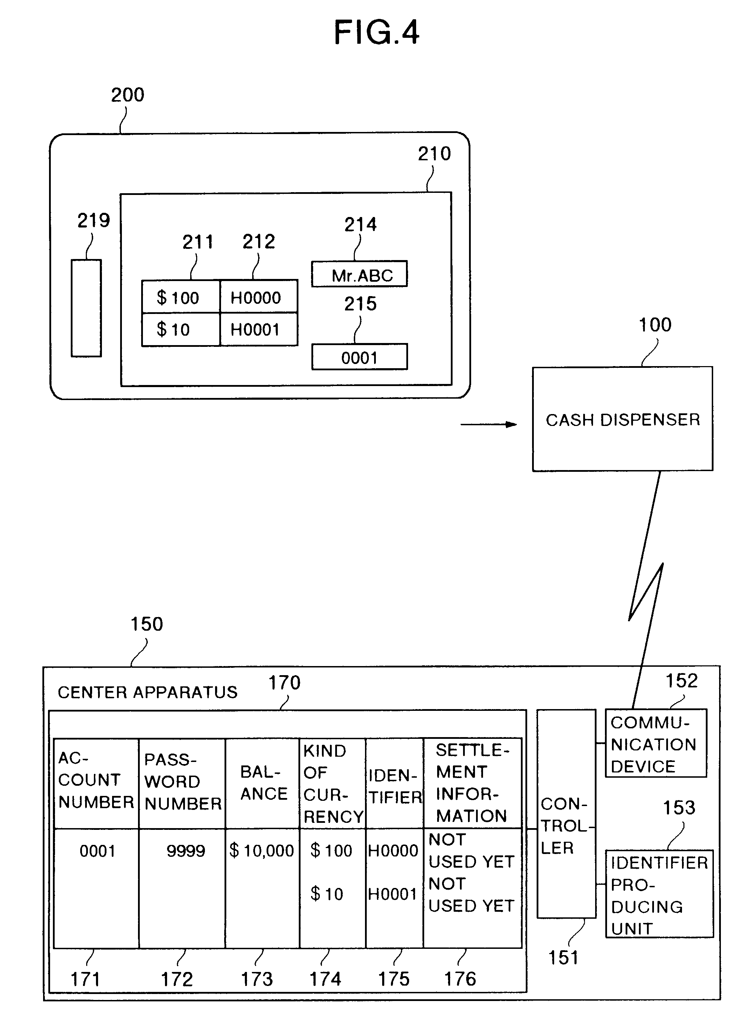

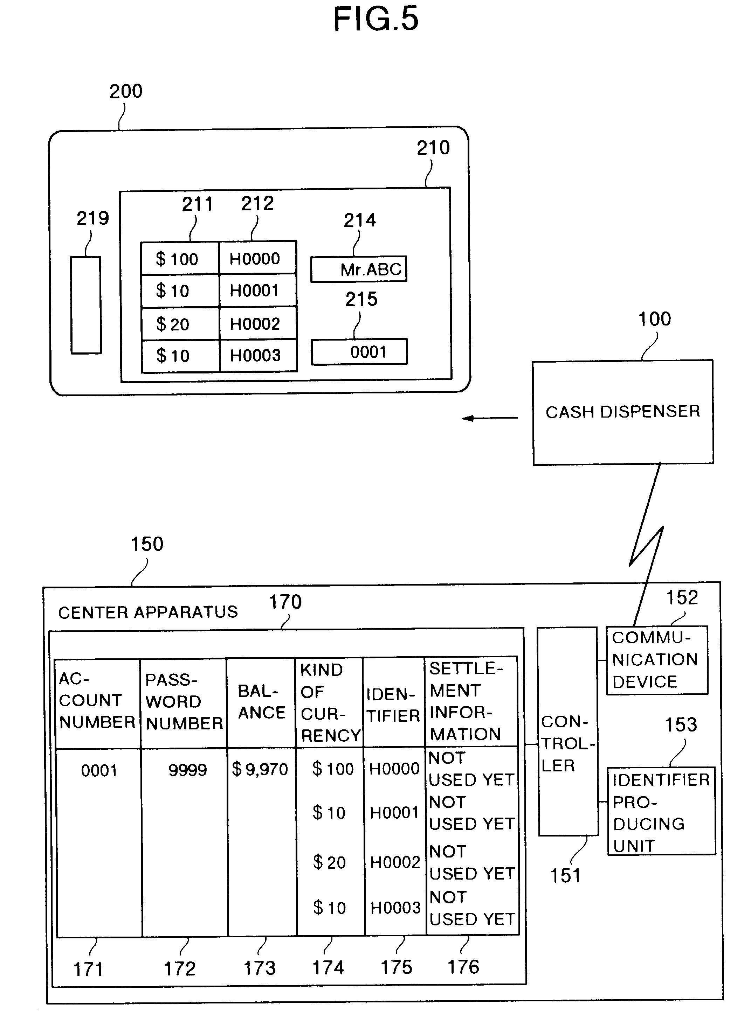

Now, the update in Step 4020 and Step 5000 will hereinbelow be described in more detail. Now, it is assumed that the initial state shown in Fig. 4 is obtained. That is, it is assumed that the balance 173 of an account of a bank corresponding to the IC card 200 is $10,000 and also the balance in the IC card 200 is $110. In other word, the utilizer of interest possesses $10,000 in his/her own account of a bank and also possesses $110 in the IC card 200. In this connection, with respect to $100 out of $110 possessed in the IC card 200, the identifier of H0000 is obtained and also with respect to $10, the identifier of H0001 is obtained. Now, it is assumed that as described with reference to Fig. 3, the utilizer carries out the operation of paying $30 from his/her own account back to the IC card 200 by utilizing the cash dispenser 100. In addition, it is assumed that the utilizer carries out the specification so as to hold $30 with $30 being divided into $20 and $10. On the other hand, it is assumed that in the center apparatus 150, the identifier of H0002 and the identifier of H0003 are automatically assigned to $20 and $10, respectively, by the identifier producing unit 153. Fig. 5 shows the updating results in Step 4020 and Step 5000 in this case.

In Fig. 5, $30 is subtracted from the balance in the balance area 173 of the center apparatus 150 so that the balance in the balance area 173 becomes $9,970, both $20 and $10 are added to the currency kind area 174, both the identifiers of H0002 and H0003 are added to the corresponding identifier area 175, and "not used yet" is added to the settlement information area 176 (Step 4020). In addition, both $20 and $10 are added to the currency kind area 211 of the IC card 200, and both the identifiers of H0002 and H0003 are added to the identifier area 212 (Step 5000).

By executing the above-mentioned procedure, the electronic money value in the IC card 200 can be divided into one or more groups and also the unique identifiers for identifying the groups can be assigned to the respective groups.

Next, the description will hereinbelow be given with respect to how to confirm, when the IC card 200 was damaged, the electronic money value which the IC card 200 held. If the bank can confirm the electronic money value which the IC card 200 holds, then the bank can provide the possessor of the IC card 200 with a sum of money represented by the electronic money value again. Therefore, even when the IC card 200 is damaged, it is possible to prevent the possessor of the IC card 200 from lossing the funds.

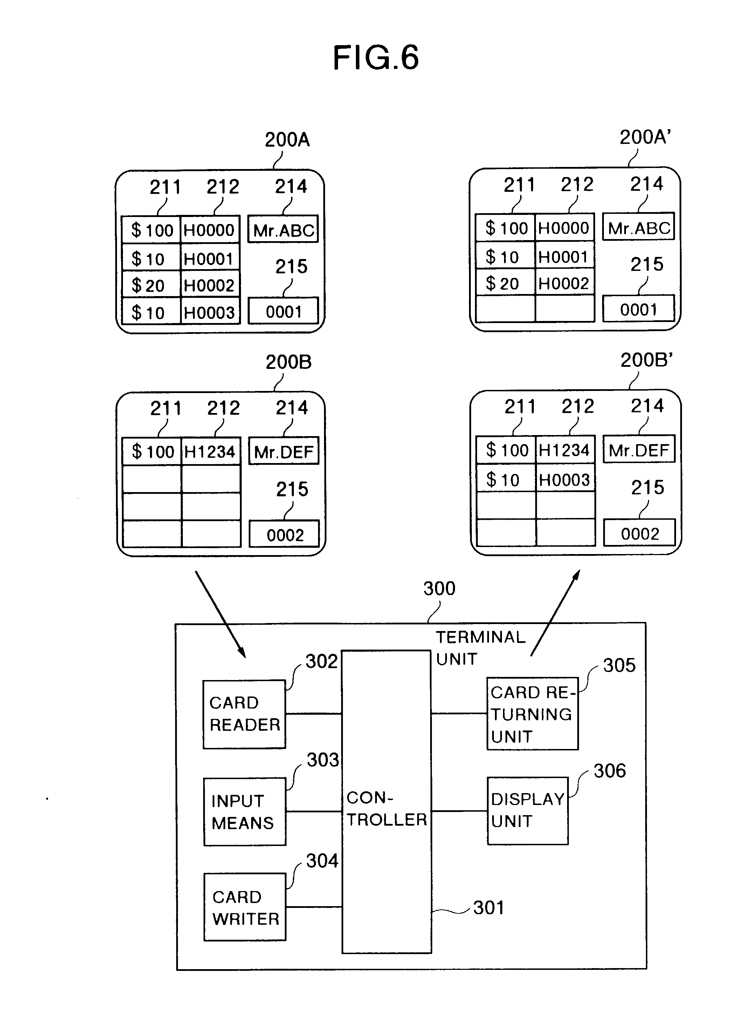

Fig. 6 shows an example of a terminal unit for transmitting therethrough the electronic money value between the IC cards 200A and 200B (or between 200A'and 200B, and so forth). In Fig. 6, reference numeral 300 designates a terminal unit for transmitting therethrough the electronic money value between the the IC cards 200A and 200B. The function of the terminal unit 300 is approximately the same as that of the cash dispenser 100 which was described with reference to Fig. 2. The fact that the terminal unit 300 is not connected to the associated bank in an on-line manner in Fig. 6 means that the card data is not managed by the associated bank. Thus, since the card data is not managed by the associated bank, after having settled the accounts using the present terminal unit 300, only the possessor of the IC card is aware of the electronic money value which the IC card 200 holds and also the associated bank is not aware of the electronic money value at all. But, this is effective unless the transaction information is transferred to the associated bank or the like at real-time, and hence the communication line may be physically connected to the center apparatus. In addition, as shown in Fig. 21, by providing two or more reader/ writers (R/Ws), the electronic money value may be transmitted bidirectionally between the IC cards 200A and 200B.

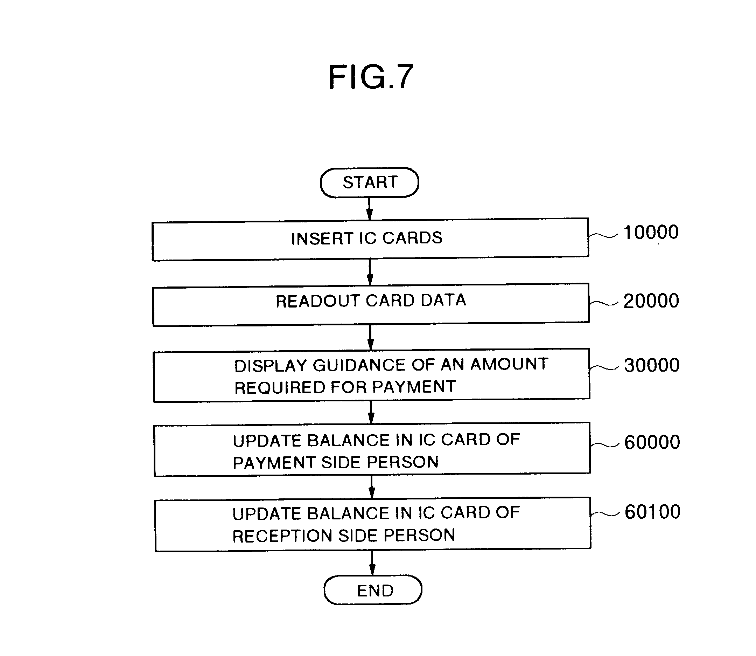

Fig. 7 is a flow chart showing an example of the settlement procedure between two sheets of IC cards 200A and 200B executed by the terminal unit 300 shown in Fig. 6. Now, the operations of the units shown in Fig. 6 will hereinbelow be described on the basis of the flow chart shown in Fig. 7. Firstly, when a utilizer inserts two sheets of IC cards 200A and 200B into the predetermined insertion ports, respectively (Step 10000), the card reader 302 reads out the card data through the I/O terminal 219 (not shown in Fig. 6)(Step 20000). As shown in the IC cards 200A and 200B of Fig. 6, it is assumed that $140 and $100 are held in the IC card 200A of Mr. ABC and the IC card 200B of Mr. DEF, respectively. Thereafter, the card data thus read out is fetched in the controller 301 in order to inspect the balance and the like therein. For example, if it becomes clear on the basis of the inspection that the balance in the IC card 200A as well as the balance in the IC card 200B are zero, then both the IC cards 200A and 200B are returned. If it is checked in the inspection that the card data is right, then the guidance of "please set the amount of payment" is displayed on the display unit 106 (Step 30000).

Incidentally, the terminal unit 300 may be of a portable type. In addition, the separate card insertion ports may be provided. Further, instead of the terminal unit 300, the cash dispenser 100 itself may be employed.

In accordance with the guidance, a utilizer operates the input means 303 in order to set the amount of payment. In this case, it is assumed that Mr. ABC pays $10 to Mr. DEF. This case corresponds to the case where Mr. ABC purchases a product of $10 from Mr. DEF and carries out the settlement for the payment using the IC card. If the amount of payment is set, then it is inspected whether or not the amount of payment exceeds the balance in the IC card 200 of Mr. ABC. If not, then both the group of electronic money value corresponding to the amount of payment and the identifier belonging to that group are deleted from the card data of Mr. ABC as the payment side person (Step 60000), and then both the group and the identifier assigned thereto are added to the card data of Mr. DEF as the reception side person (Step 60100). The card data of the two sheets of IC cards after completion of the settlement is shown in the IC cards 200A'and 200B'.

With respect to the card data (shown in the IC cards 200A'and 200B) after completion of the settlement of Fig. 6, both the currency kind 211 of $10 and the identifier 212 of H0003 are deleted from the card data of Mr. ABC, and also both the currency kind 211 of $10 and the identifier 212 of H0003 are added to the card data of Mr. DEF. While after completion of the settlement, the two sheets of IC cards are returned back through the card returning unit 305, at this time, Mr. ABC and Mr. DEF confirm the card data (the currency kind 211 and the identifier 212) of their IC cards through the display unit 306. As a result, as shown in the figure, the card data of the IC cards 200A and 200B are changed into the card data of the IC cards 200A' and 200B' .

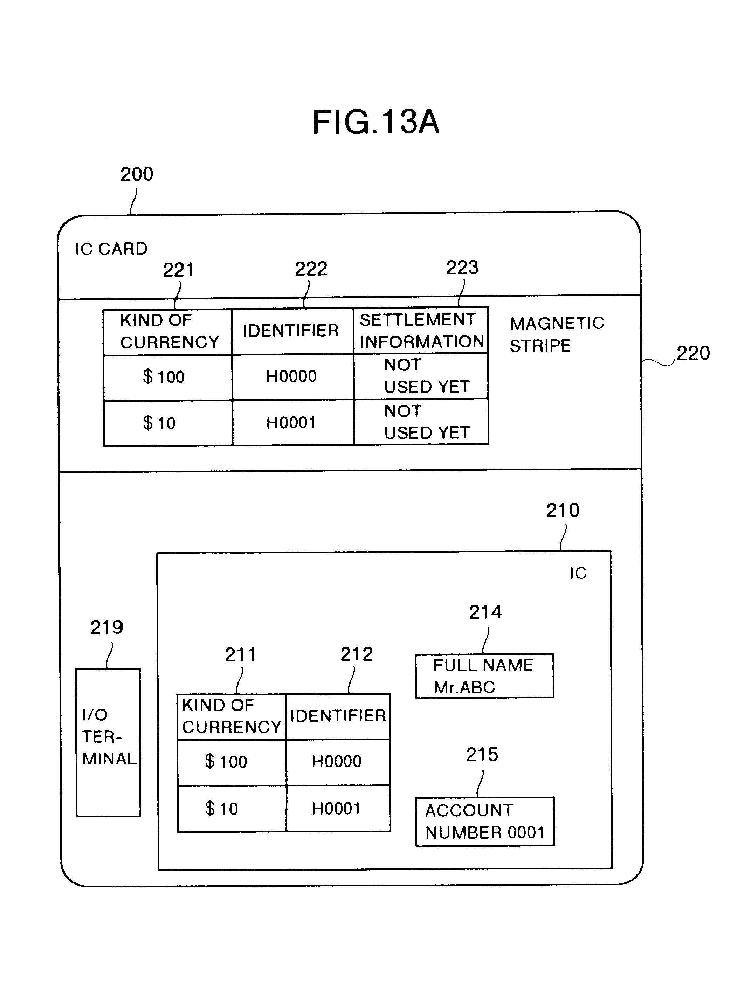

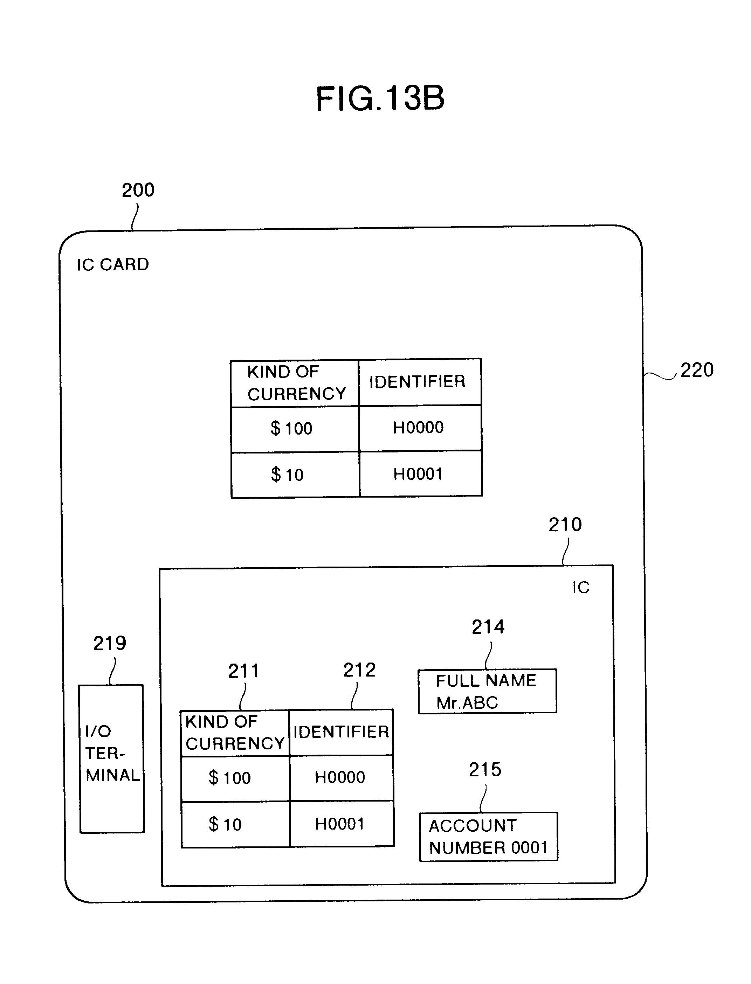

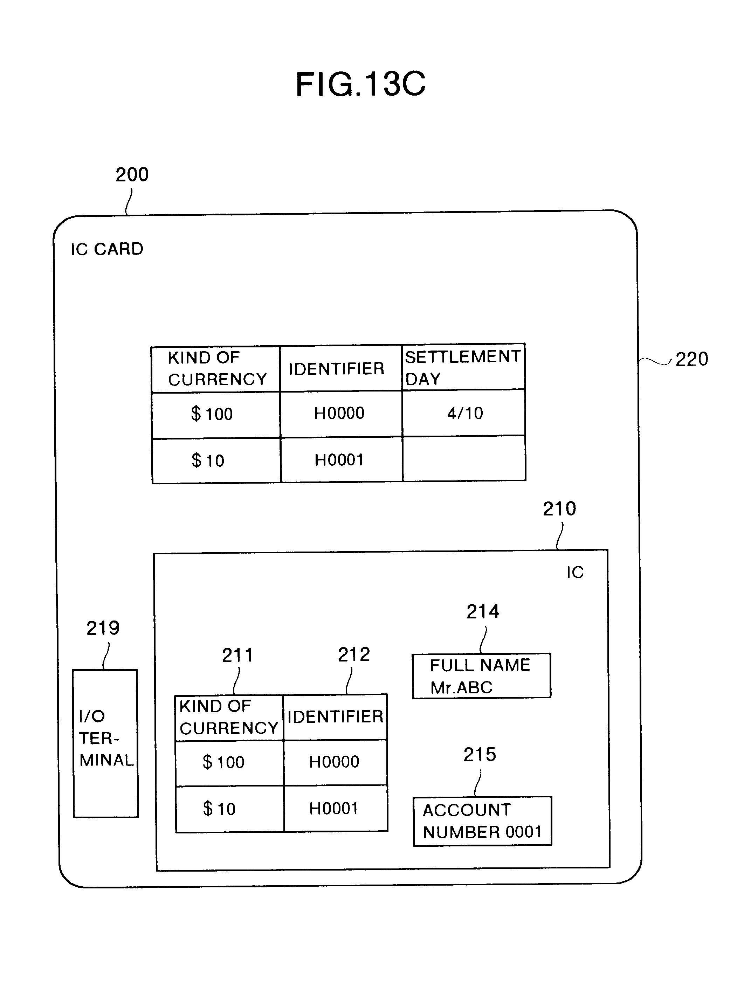

Now, it is assumed that after completion of the settlement, the IC card 200A'of Mr. ABC is damaged so that the data can not be read out from the IC card 200A: Since Mr. ABC confirmed the card data through the display unit 306, Mr. ABC is aware of that the IC card 200A'holds $100, $10 and $20, i.e., $130 in total and also the unique identifiers corresponding thereto are H0000, H0001 and H0002, respectively. In addition, the information relating to the electronic money value which is not settled yet may be printed on the surface of the IC card, or may be stored not only in the IC portion of the IC card, but also in the magnetic stripe. These examples are shown in Fig. 13 and the details thereof will be described later. Therefore, the procedure may be adopted in which the damaged IC card is carried to the associated bank in order to carry out the report with respect to $130 which the IC card 200A'held and the above-mentioned three identifiers assigned thereto so that the associated bank provides Mr. ABC with $130. At this time, Mr. ABC as well as the associated bank do not loss the funds. In addition, the reissue is carried out with respect to only the electronic money value in which the settlement information is "not used yet" in the memory 170 of the center apparatus 150. Incidentally, the details of the reissue will be described later.

In the explanation given above, the unique identifiers 212 are respectively assigned to one or more group which are obtained by dividing the electronic money value thereinto, and also the group is transferred together with the identifier 212 assigned thereto to another IC card 200. This reason is as follows: That is, for example, it is assumed that after Mr. ABC has paid $10 to Mr. DEF in accordance with the procedure shown in Figs. 6 and 7, Mr. ABC damages intentionally his/her own IC card 200 and then reports the associated bank that $10 is not used yet. At this time, the associated bank can not judge whether or not Mr. ABC used actually $10. Therefore, the associated bank has to pay $10 to Mr. ABC. However, since $10 which was used is present together with the identifier of H0003 in the IC card of Mr. DEF, the injustice of Mr. ABC can be discovered with that fact as evidence.

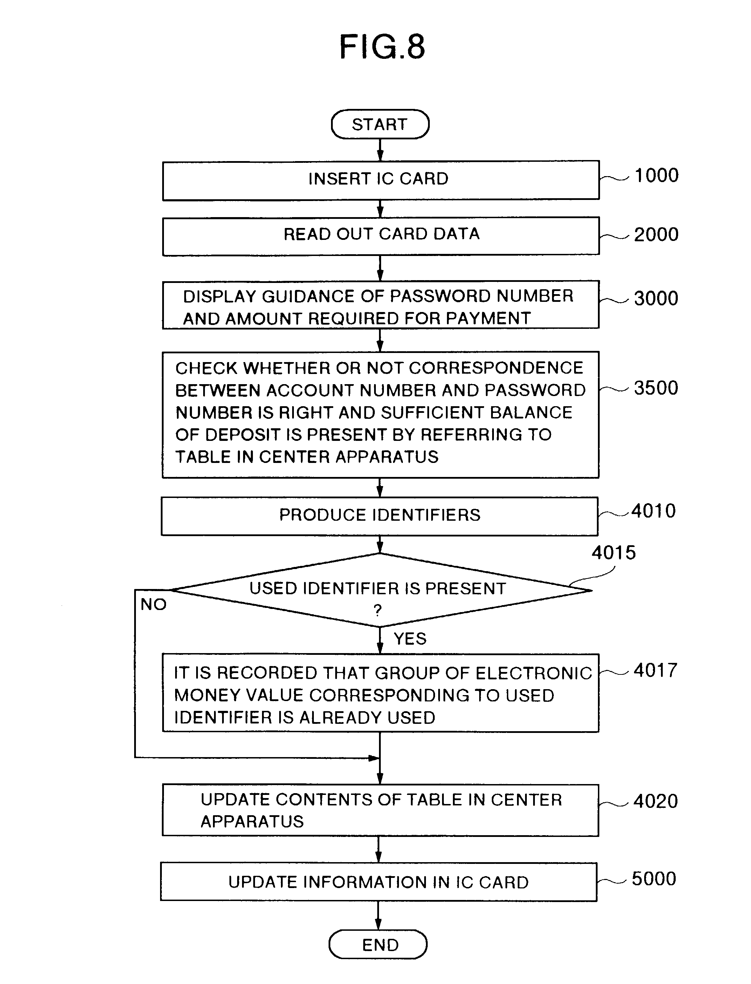

In addition, in order to discover more surely the injustice, the procedure when withdrawing cash to the IC card 200 by utilizing the cash dispenser 100 shown in Fig. 3 has only to be replaced with the procedure shown in Fig. 8. In the procedure shown in Fig. 8, before updating the contents of the table in the center apparatus in Step 4020 of Fig. 3, the use situation of the identifiers is checked. For example, it is assumed that the bank provided Mr. ABC with $10 on the basis of the unjust report by Mr. ABC. Thereafter, when Mr. DEF pays back a deposit by utilizing the cash dispenser 100, in the procedure shown in Fig. 8, it is checked whether or not any identifier other than the identifiers which Mr. DEF has obtained is present in the IC card of Mr. DEF (Step 4015). In this case, since the identifier of H0003 which Mr. ABC obtained is present in the IC card of Mr. DEF, the settlement information 176 corresponding to the above-mentioned identifier of H0003 is retrieved to be updated to "already used" (that is, out of the fund information relating to Mr. ABC in the center apparatus 150 shown in Fig. 5, the settlement information 176 corresponding to the electronic money value which has the currency kind 174 of $10 and the identifier 175 of H0003 is updated from "not used yet" to "already used"), whereby it is recorded that the group of electronic money value having the identifier of interest belonging thereto is already used (Step 4017). Incidentally, by the identifier which Mr. DEF has obtained is meant the identifier which is registrated in the account of Mr. DEF in the center apparatus 150. Normally, the identifier which is assigned to the group when Mr. DEF pays back cash from his/her own account to his/her own IC card becomes the identifier which Mr. DEF has obtained. This is also applied to Mr. ABC. As described above, on the basis of the processings in Steps 4015 and 4017, it is recorded in the fund information relating to Mr. ABC in the center apparatus 150 that $10 corresponding to the identifier of H0003 of Mr. ABC is already used. As a result, thereafter, even if Mr. ABC carries out the unjust report (the report that Mr. ABC would like the associated bank to repay money including $10 corresponding to the identifier of H0003 since the IC card was damaged), then this report can be judged to be unjust. But, in the case of this example, since before the settlement information 176 corresponding to the identifier of H0003 is made "already used", the associated bank already provided Mr. ABC with $10 corresponding to the identifier of H0003, at the time point when Mr. DEF pays back the deposit, the injustice to Mr. ABC becomes clear.

In the above-mentioned example of coping with the injustice, the use situation of the groups of electronic money values having the identifiers belonging thereto is obtained by utilizing the cash dispenser 100 installed in the bank. Alternatively, instead thereof, the above-mentioned use situation may also be obtained by utilizing a specific terminal unit installed in a major department store. In order to achieve that method, the procedure may be adopted in which a terminal unit is installed which is obtained by adding the facility of being able to communicate with the center apparatus 150 to the terminal unit 300 shown in Fig. 6, and when carrying out the settlement between the IC card of the department store and the IC card of a consumer, the identifier 212 belonging to the group, which is already used, out of the groups of electronic money values which are present in the IC card of the consumer, is reported to the center apparatus 150. Then, in the center apparatus 150, the reported identifier may be retrieved and also the corresponding settlement information 176 may be updated to "already used".

In addition, as for another method, when reissuing the electronic money value, the identifier before the reissue is previously stored in at least one of the center apparatus 150 and the cash dispenser 100. As a result, if the electronic money value having the identifier before the reissue is settled, then it can be grasped that the injustice was done. If the data relating to the reception side of receiving the reissued identifier is stored together therewith, then the injustice can be more effectively grasped.

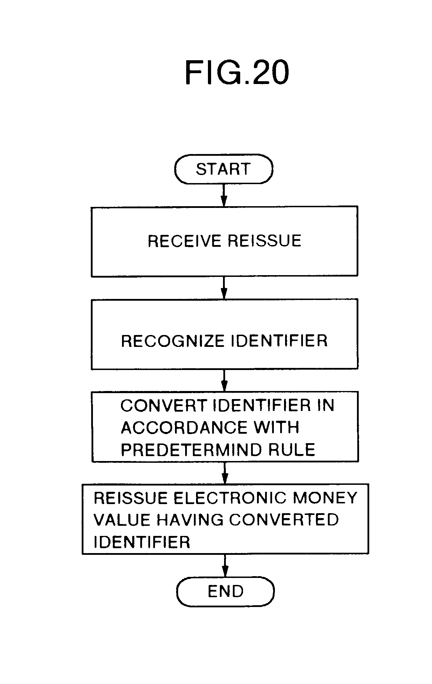

In addition, as for still another method, when reissuing the electronic money value, the identifier may be assigned in some cases in the following manner. This is achieved in such a way that the predetermined correspondence relationship is established between the identifier of the electronic money value after the reissue and the identifier of the electronic money value (which was lost) before the reissue. For example, a symbol indicating the reissue is added to the identifier before the reissue. As this example, if the lost identifier is "H0003", then the identifier to be reissued is made "H0003R" or the like. In addition, the same identifier may be assigned thereto. In this connection, if the IC card is provided with the facility of communicating, when the electronic money value having a predetermined relationship appears in the IC card simultaneously, or after a time lag, this fact to the center apparatus 150 or the like, then the injustice is more readily discovered. In addition, if the data relating to the reception side of receiving the reissued electronic money value is stored together therewith, then the injustice will be more readily discovered. The flow chart in this case is as shown in Fig. 20.

While in the above-mentioned embodiment of the present invention, the organ for assigning the identifiers through the cash dispenser 100 and for ensuring the electronic money value which the IC card holds is the bank, the present invention is not limited thereto. For example, a fixed commission is allowed to an insurance company so that the electronic money value in the IC card is divided into the groups and also the unique identifiers are respectively assigned to the groups. In this case, the amount to which the unique identifiers are assigned by the insurance company can be, even if the IC card is damaged, insured by the insurance company, and also the unjust report can be discovered in the insurance company side as well.

Now, the more detailed description will hereinbelow be given with respect to the dealing of the identifiers 212 when the electronic money value in the IC card 200A which has been divided into the groups is transferred to another IC card 200B. In the example shown in Fig. 6, since for the payment of $10, the group representing just $10 is present in the IC card of Mr. ABC, the group can be transferred together with the identifier of H0003 belonging to that group to the IC card of Mr. DEF. However, if the amount of payment is $1, since the group representing just $1 is not present in the IC card of Mr. ABC, the settlement can not be carried out in accordance with the above-mentioned method. Hereinbelow, first, the description will be given with respect to a method wherein the group of electronic money value having the identifier assigned thereto is further divided in order to make the settlement possible, and then the description will be given with respect to a method wherein the group of electronic money value having the identifier assigned thereto is not divided any more, thereby making the settlement possible.

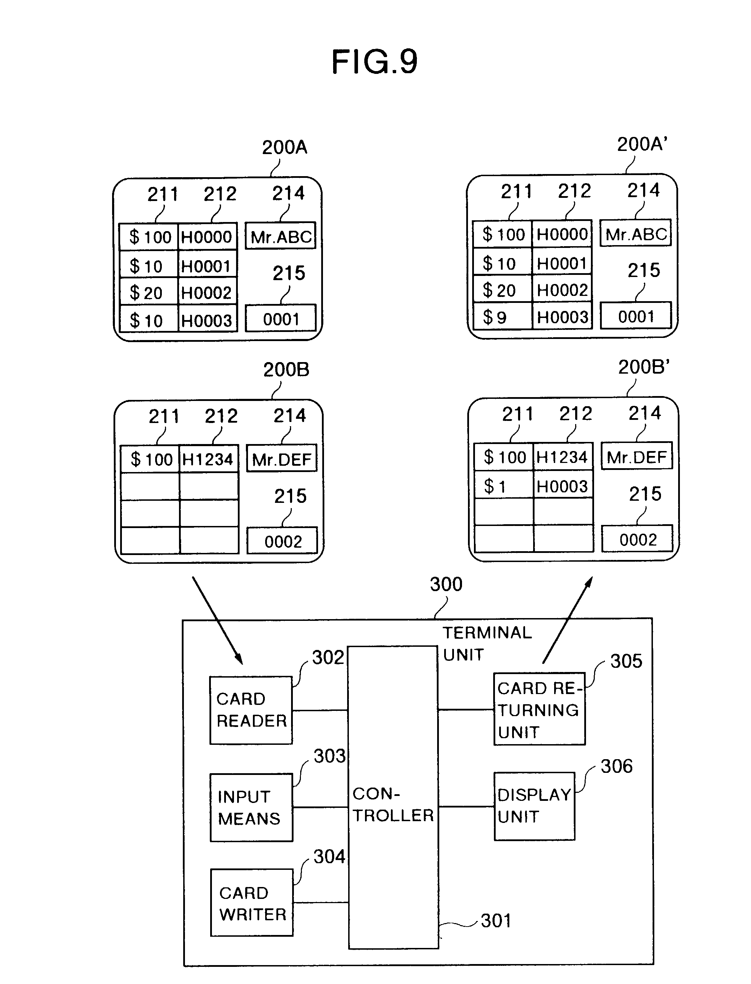

Firstly, the description will hereinbelow be given with respect to the method wherein the group of electronic money value having the identifier assigned thereto is further divided in order to make the settlement possible with reference Figs. 5, 8 and 9. It is assumed that in the initial states of the two sheets of IC cards 200A and 200B shown in Fig. 9, the amount of payment which is paid from Mr. ABC to Mr. DEF is $1. The group having $1 as an amount is not present in the IC card 200A of Mr. ABC. At this time, for example, $10 corresponding to the identifier of H0003 is divided into $1 and $9. Then, the identifier of H0003 is assigned to $1 which is to be transferred to the IC card 200B of Mr. DEF and also the same identifier of H0003 is also assigned to $9 remaining in the IC card 200A of Mr. ABC so that$1 and $9 are held in the IC card 200A of Mr. ABC. The card data after the update is as shown in the IC cards 200A'and 200B'of Fig. 9. As a result, $1 can be paid from the IC card 200A of Mr. ABC to the IC card 200B of Mr. DEF. The state after completion of the payment corresponds to the state shown in the IC cards 200A' and 200B'.

After the state shown in the IC cards 200A' and 200B' of Fig. 9 has been obtained, in the procedure of Fig. 8, if the IC card 200A of Mr. ABC is inserted into the cash dispenser 100 (Step 1000), since it is found by referring to the currency kind area 174 in the center apparatus 150 that the group corresponding to the identifier of H0003 is originally $10, it is found to the bank that the group of electronic money value to which the above-mentioned identifier belongs is already used (Step 4015). Likewise, it is already shown that in the procedure of Fig. 8, when the IC card of Mr. DEF is inserted into the cash dispenser 100 (Step 1000), it is found to the bank that the group of electronic money value to which the above-mentioned identifier belongs is already used (Step 4015). In any case, the settlement information area 176 of the center apparatus 150 corresponding to the above-mentioned identifier of H0003 is retrieved to update the settlement information to "already used", whereby it can be recorded that the group of electronic money value corresponding to the above-mentioned identifier of H0003 is already used (Step 4017). Thereafter, it is impossible for Mr. ABC to insist that the electronic money value corresponding to the identifier of H0003 is not used yet.

Hereinabove, the description has been given with respect to the method wherein the group of electronic money value having the identifier assigned thereto is further divided in order to carry out the settlement.

Incidentally, in the case where the group representing the amount of settlement is absent, the procedure may be adopted in which the group is not divided any more in order to carry out the settlement, but the settlement is stopped. As a result, the group is not divided any more and hence with respect to all the groups in the IC card, the deposit is insured.

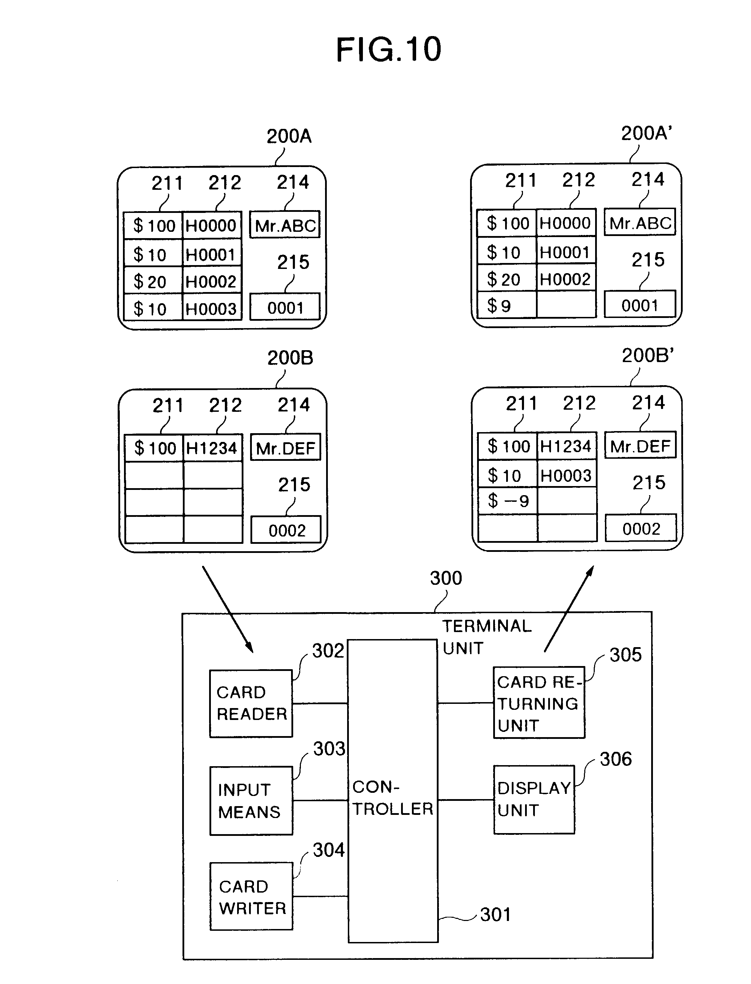

Next, the description will hereinbelow be given with respect to the method wherein the group of electronic money value having the identifier assigned thereto is not divided any more in order to make the settlement possible with reference to Fig. 10. This method is a method wherein the concept is introduced in which the group of electronic money value having no identifier assigned thereto is employed, and the group having the identifier assigned thereto is transferred together with the identifier, and also the difference between the amount represented by the group thus transferred and the amount of settlement is adjusted by employing the group of electronic money value having no identifier assigned thereto. In Fig. 10, $10 having the identifier of H0003 is transferred from the IC card 200A of Mr. ABC to the IC card 200B of Mr. DEF, while $9 having no identifier is transferred from the IC card 200B of Mr. DEF to the IC card 200A of Mr. ABC. In this connection, "$-9" shown in the IC card 200B'of Mr. DEF means that $9 is subtracted from the whole electronic money value in the IC card of interest. As a result, $1 can be paid from the IC card 200A of Mr. ABC to the IC card 200B of Mr. DEF.

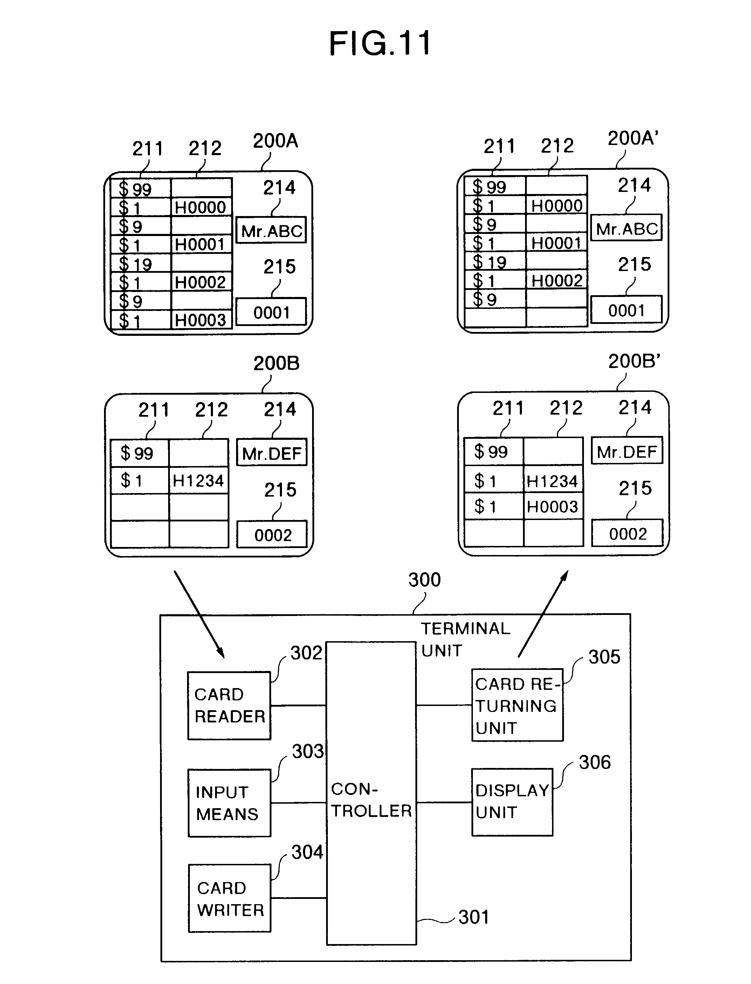

Incidentally, while in the method wherein the group of electronic money values having the identifiers assigned thereto is further divided in order to make the settlement possible, and the same identifier is added to both the IC card of the payment side person and the IC card of the reception side person, the present invention is not limited to this identifier transferring method. For example, the method may also be adopted in which the identifier is assigned to the group of electronic money value representing a minimum unit of the currency. This example is shown in Fig. 11. In this case, $100 which Mr. ABC possesses is held in the IC card in the form of pair of $99 having no identifier and $1 having the identifier of H0000 assigned thereto, and with respect to the use order, $1 will be used earlier than $99. Hereinbelow, this is also applied to $10, $20 and $10. That is, $10, $20 and $10 are held in the IC card in the form of pairs of $9, $19 and $9 each having no identifier and $1, $1 and $1 having the respective identifiers assigned thereto, and with respect to the use order, each $1 having the associated identifier assigned thereto will be used on ahead. Now, when $1 is paid from the IC card 200A of Mr. ABC to the IC card 200B of Mr. DEF, $1 having the identifier of H0003 has only to be transferred. In addition, when paying $3, both $1 having the identifier of H0003 and $2 having no identifier have only to be transferred.

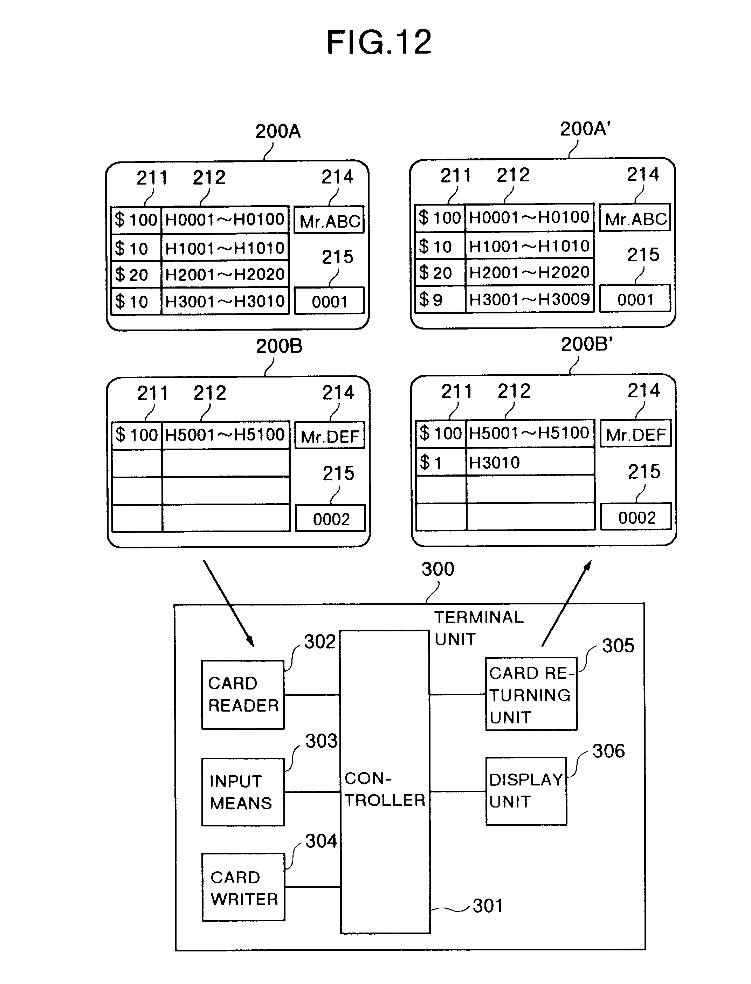

From the foregoing, it is understood that even if the group representing just the amount of payment is absent in the IC card 200 of the payment side person, the settlement can be carried out. In the above-mentioned method, however, if a part of the groups of electronic money values is transferred, then "already used" is recorded in the settlement information 213 corresponding to the group thus transferred, and hence when the IC card is damaged, the remaining electronic money value is not reissued. In other words, since one identifier is made correspond to every group of electronic money value, for example, if $1 out of $10 having the identifier of H0003 is used, then the remaining $9 becomes the electronic money value which is not reissued at all even when the IC card is damaged. Fig. 12 shows how to assign the identifiers 212 in order to cope with this problem. In this case, a plurality of identifiers are assigned to the group of electronic money values which group is obtained by the division.

$140 in total is held in the IC card 200 of Mr. ABC in Fig. 12. In this connection, the 100 identifiers ranging from H0001 to H0100 are assigned to $100, the 10 identifiers ranging from H1001 to H1010 are assigned to $10, the 20 identifiers ranging from H2001 to H2020 are assigned to $20, and the 10 identifiers ranging from H3001 to H3010 are assigned to $10. A utilizer does not need to be conscious of the group division and the assignment of the identifiers. That is, the system side divides automatically the electronic money value in the IC card into the groups each having a suitable amount. In this connection, the identifiers are assigned in such a way that the one-to-one correspondence is always found between one identifier and a minimum unit of the currency. For example, in the case where the total is $140, the 140 identifiers ranging from H0001 to H0140 may be assigned to $140 with $140 as one group.

In the state of the card data shown in the IC cards 200A and 200B of Fig. 12, when $1 is paid from Mr. ABC to Mr. DEF, the procedure may be adopted in which $1 is transferred together with the identifier of H3010 from the IC card of Mr. ABC to the IC card 200B of Mr. DEF so that the identifiers ranging from H3001 to H3009 are left together with $9. As a result, even if the IC card is damaged, the reissue is insured for all the electronic money values remaining in the IC card 200A'of Mr. ABC after completion of the settlement. In addition, since there is no need of dividing previously the electronic money value into the groups with fine unit, the storage capacity of the IC card can be saved and also in Step 3000 of Fig. 3 or 8, the laber of being conscious of the division for the group by a utilizer can be reduced.

In the above-mentioned embodiment of the present invention, when settling the accounts between the IC cards 200 through the terminal unit 300, a utilizer needs to confirm the card data (the currency kind 211 and the identifier 212) which the IC card 200 holds through the display unit 306. However, it is troublesome to confirm the card data whenever carrying out the settlement in order to make a note of the card data. Therefore, it is difficult to report the associated bank of the card data when the IC card 200 was damaged. As a result, it can not be judged whether or not a utilizer who carried out the unjust report to the associated bank had a mind to carry out the unjust report to the associated bank.

In order to solve the above-mentioned problem, there is considered a method of storing the hysteresis in a storage area corresponding to the IC card 200. Even when the IC card 200 is damaged, the necessary card data can be read out from the storage area. By the hysteresis is meant the hysteresis for holding the information that the settlement has been carried out using the electronic money value having the identifier assigned thereto. For example, the IC card may be constructed as shown in Fig. 13A. In Fig. 13A, the configurations of both the IC 210 embedded in the IC card 200 and the I/O terminal 219 are the same as those which were described with reference to Fig. 1. In the figure, reference numeral 220 designates a magnetic stripe. It is assumed that the cash dispenser 100 of Fig. 2 and the terminal unit 300 of Fig. 6 are designed in such a way as to be able to read out magnetically the hysteresis or the magnetic stripe 220 of the IC card 200 using the card readers 102 and 302 and also to record the hysteresis on the magnetic stripe 220 using the card writers 104 and 304. A currency kind area 221, an identifier area 222 and a settlement information area 223 are provided on the magnetic stripe 220 as the storage area for storing therein the hysteresis relating to the electronic money value which the IC card 200 holds.

In the IC card 200 of Fig. 13A, when the group of electronic money value having the identifier assigned thereto is used, the settlement information 223 corresponding to that group is updated to "already used". When the information stored in the storage portion within the IC 210 can not be read out due to the damage of the IC card 200, the IC card 200 thus damaged is carried to the associated bank in order to read out the data from the storage portion within the magnetic stripe 220, whereby the associated bank can provide the possessor of the IC card 200 with the amount again represented by the group which has the identifier 222 assigned thereto and also has the settlement information 223 of "not used yet". Incidentally, while in the above-mentioned example, the magnetic stripe 220 is employed, the present invention is not limited thereto. For example, instead thereof, a handwritten memo may be employed. A utilizer can rewrite the magnetic stripe and the memo as much as the utilizer likes by design. However, the feature of the present invention is that whether the hysteresis can be rightly obtained or not, the electronic money value which the IC card holds can be confirmed. For this reason, the identifier 212 is transferred together with the electronic money value.

In addition, as shown in Figs. 13B and 13C, the fund information may be printed on the surface of the IC card. In this case, at least unused (unsettled) fund information is printed. For example, as shown in Fig. 13B, only the fund information remaining in the IC card is printed. In this case, the fund information may also be rewritten whenever transferring the electronic money value. In addition, as shown in Fig. 13C, the information relating to the date when the electronic money value was transferred (the settleing day) may be printed so that whether or not the electronic money value has already been transferred becomes clear.

In the method described with reference to Fig. 13A, the hysteresis is recorded in the magnetic stripe 220 on the IC card 200. In addition, however, the authorization information indicating the possessor of the IC card 200 is previously stored in the IC card and it is inspected when carrying out the settlement, whereby the function of traveler's check can be electronically realized. This will hereinbelow be described with reference to Figs. 14, 15 and 16.

Fig. 14 shows an example of the structure of the IC card 200. As shown in Fig. 14, a password number 216 of the possessor is stored in the IC card 200 so that the electronic money value which the IC card 200 holds can not be used unless the password number 216 is inputted in the settlement operation. In addition, since after having inputted the right password number, the electronic money value is transferred together with the above-mentioned password number, there is provided an authorization information area 217 for storing therein the password number thus transferred. As a result, with respect to the fund information the password number of which is stored in the authorization information area 217, it is found that the electronic money value of interest is the electronic money value which the possessor who is aware of that password number used surely. Other structure of the IC card 200 is the same as that shown in Fig. 13.

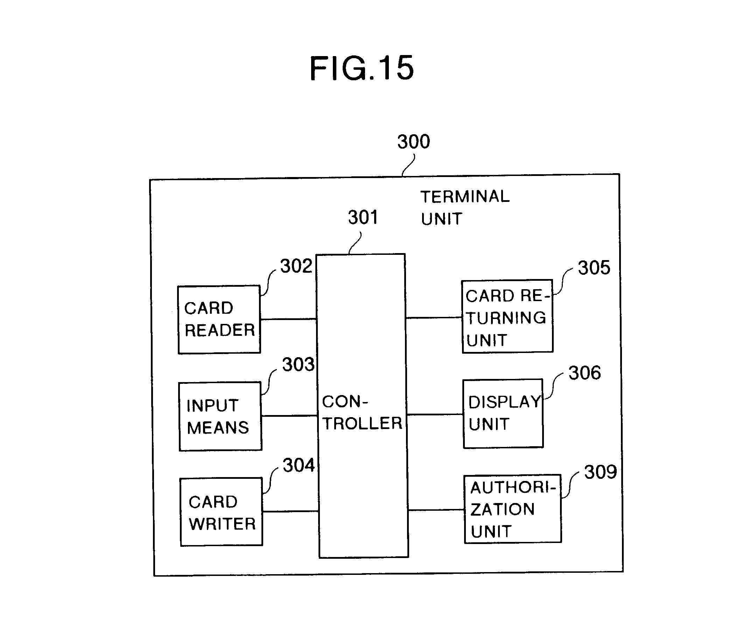

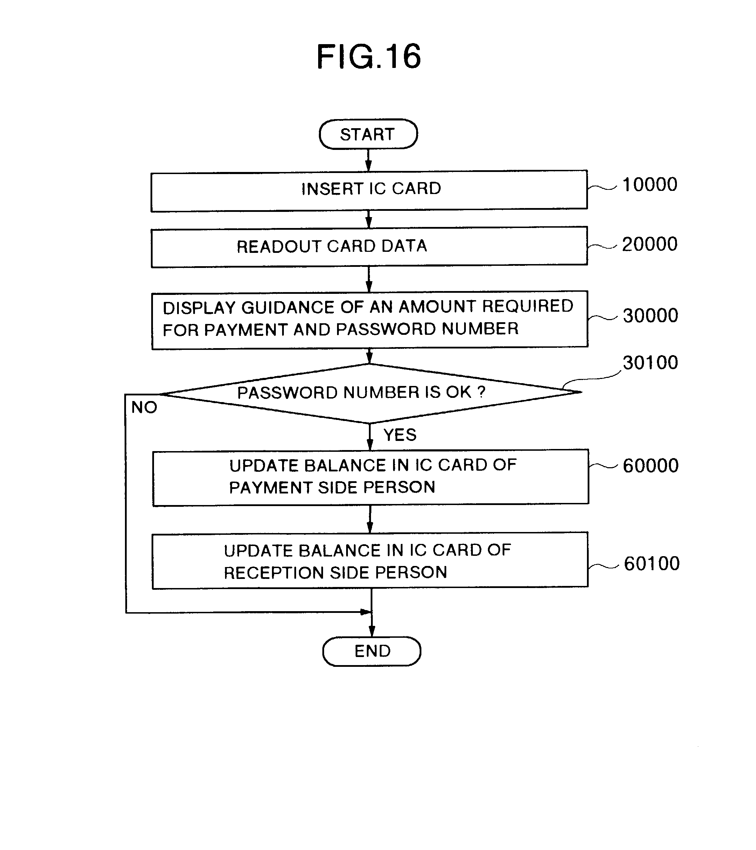

Fig. 15 shows a terminal unit for realizing the traveler's check function using the above-mentioned IC card 200. A terminal unit 300 shown in Fig. 15 is designed in such a way as to add an authorization unit 309 to the terminal unit 300 shown in Figs. 6 and 21. Fig. 16 shows the settlement procedure of the terminal unit 300 for realizing the traveler's check function. That is, in Step 20000 of the flow chart shown in Fig. 7, the password number 216 as well as the balance in the IC card are read out, and then a utilizer is pressed for the input of the password number (Step 30000). Then, whether or not the password number which has been inputted by a utilizer matches the password number stored in the IC card 200 is judged using the authorization unit 309 (Step 30100). If not, then the settlement can not be carried out. By adopting this method, since the electronic money value which the IC card 200 holds can not be used by a third party, even if the whole IC card 200 is lost or stolen, then the electronic money value and the identifier which the IC card holds are reported to the associated bank, whereby the electronic money value which the IC card holds can be reissued by the associated bank. But, as long as the procedure is merely limited to that a person other than the right possessor can not use the electronic money value which the IC card holds, when the associated bank discovers the identifier which the stolen or lost IC card holds, it can not be judged by the associated bank whether the right possessor of the IC card 200 used the electronic money value having the identifier belonging thereto, or a person who stole or picked up the IC card used the electronic money value having the identifier belonging thereto. For example, it is considered that after the possessor of the IC card has carried out the fulse report that the IC card was stolen or lost and then receives the reissued IC card, the possessor may use both the original IC card and the reissued IC card. For this reason, in Step 60000 and Step 60100, the electronic money value is transferred together with the above-mentioned authorization information (the password number). As a result, it is possible to see through the injustice such that the possessor himself/herself who is aware of the password number uses doubly the electronic money value.

In addition, as have already been described, the injustice can be discovered even when the identifier before the reissue and the identifier after the reissue are given so as to have a predetermined correspondence relationship therebetween.

While in the above-mentioned example, the password number is employed as the authorization means for indicating the possessor of the IC card 200, the present invention is not limited thereto. That is, a method of employing a finger mark instead of the password number, or a method of employing handwriting may also be employed instead thereof.

In the example shown in Fig. 10, the electronic money value having no identifier assigned thereto is introduced. This corresponds to $9 in the IC card 200A'and $-9 in the IC card 200B'shown in Fig. 10. By utilizing this concept, the possessor of the IC card 200 can use the electronic money value in which it is insured that even when the IC card is damaged, the balance can be confirmed, and the electronic money value having the anonymousness which is not managed by the associated bank at all appropriately. That is, the possesor of the IC card gets the associated bank to assign the identifier to the electronic money value which the IC card holds, thereby getting the associated bank to insure that the balance can be confirmed, while by assigning no identifier to the electronic money value, the anonymousness can be obtained. This will hereinbelow be described.

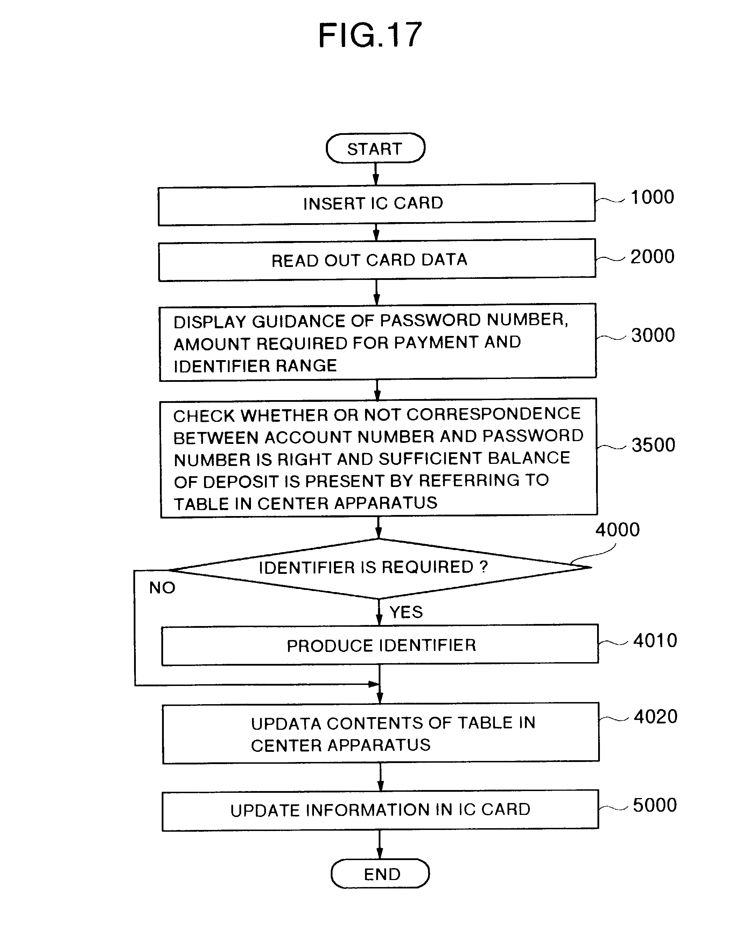

Fig. 17 is a flow chart showing the settlement procedure by the cash dispenser 100. This flow chart is approximately the same as that shown in Fig. 3 except that after displaying the guidance with respect to the range, in which the identifier is assigned, in Step 3000, whether or not the electronic money value requires the identifier is judged before producing the identifier in Step 4010 (Step 4000), and then the identifier is assigned to only the electronic money value requiring the identifier (Step 4010). Whether or not the identifier is assigned is specified by a utilizer.

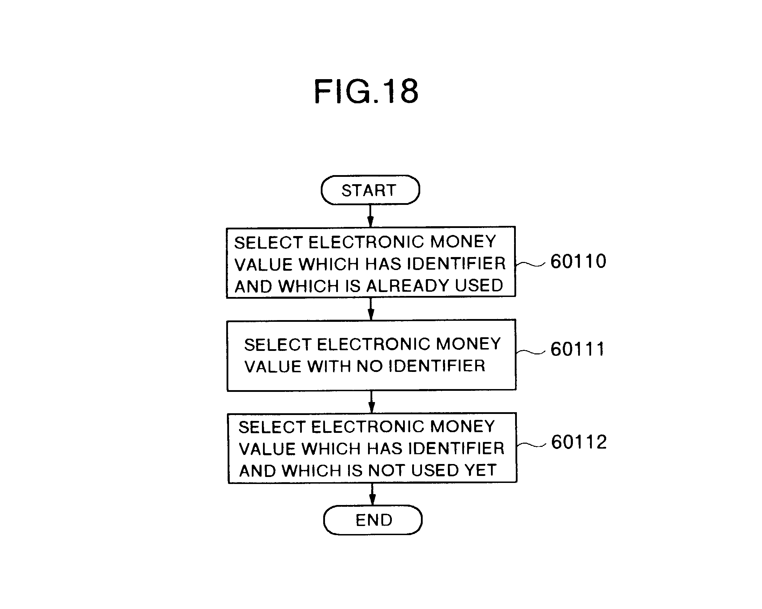

Next, the description will hereinbelow be given with respect to which group is to be transferred when transferring the group of electronic money value which the IC card 200 holds to another IC card 200. Fig. 18 is a flow chart showing in detail the procedure (Step 60000 in Figs. 7 and 16) of selecting the group in the terminal unit 300 shown in Figs. 6 and 15. The flow chart will hereinbelow be described. This procedure will hereinbelow be described. In Step 60000, when transferring the group of electronic money value from the IC card 200 of the payment side person to the IC card 200 of the reception side person, firstly, the group, which has the identifier assigned thereto and which is already used, out of the groups of electronic money values which the IC card of the payment side person holds, is transferred (Step 60110). If the group which is already used is absent or the amount of payment is not fulfilled, then the group which has no identifier assigned thereto is transferred to the IC card 200 of the reception side person (Step 60111). If the group which has no identifier assigned thereto is absent or the amount of payment is not fulfilled, then the group which has the identifier assigned thereto and which is not used yet is transferred to the IC card 200 of the reception side person (Step 60112).

As described above, the group which has the identifier and which is already used is transferred to the IC card of the reception side person, whereby the currencyness of the identifier which belong to the used group is increased and hence the probability that the identifier is discovered by the organ such as a bank which manages the identifiers can be increased. Therefore, the efficiency of managing the identifiers is enhanced. Next, the group which has no identifier assigned thereto is transferred, whereby the fund information which the IC card 200 holds has many groups which have the identifiers assigned thereto and also which are not used yet. Therefore, the probability that when the IC card was damaged, the possessor of the IC card thus damaged can get the associated bank to reissue the electronic money value is increased. This is safe for the possessor.

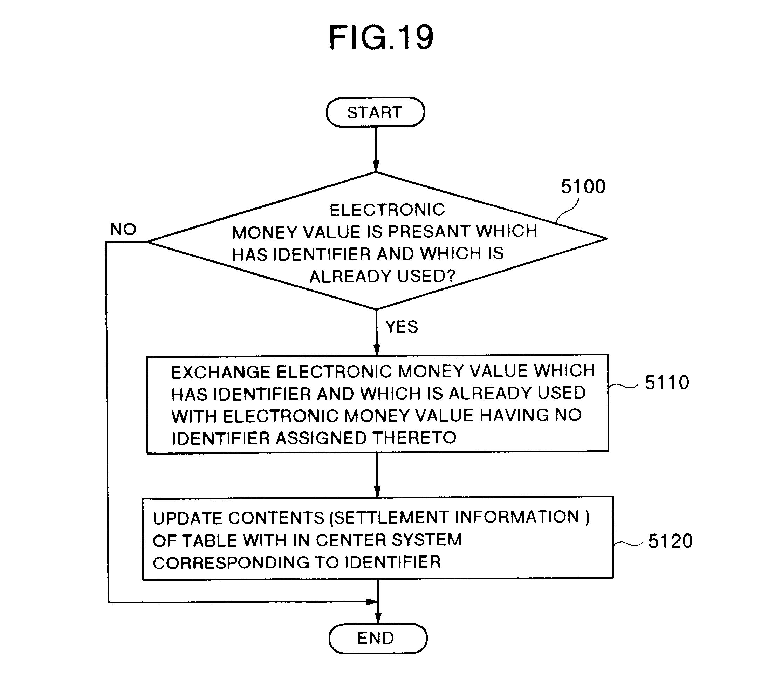

It was described that in Step 60110 of Fig. 18, the probability that the identifier belonging to the group which is already used is discovered by the organ such as a bank which manage the identifiers is increased. In this connection, the procedure thereof is already shown in Fig. 8. Advancing this procedure, in Step 5000 of Fig. 8, the group, which has the identifier assigned thereto and which is already used, out of the groups of electronic money values which the IC card holds, is collected by the cash dispenser 100 in order to be exchanged with the electronic money value with no identifier corresponding to the amount represented by the group thus collected, whereby the storage capacity of the IC card can be saved and also the efficiency of managing the identifiers can be enhanced. This will hereinbelow be described with reference to a flow chart shown in Fig. 19.

A flow chart of Fig. 19 shows in detail the processing in Step 5000 of Fig. 8. In Fig. 19, when transferring the electronic money value to the IC card 200, firstly, it is checked whether or not the electronic money value is present which has the identifier and is already used and which the IC card holds (Step 5100). If so, then the above-mentioned electronic money value is collected and then the electronic money value having no identifier assigned thereto is transferred to the IC card 200 (Step 5110). Next, the settlement information 176 in Fig, 2 corresponding to the collected identifier is updated to "already used" (Step 5120).

According to the above-mentioned embodiment, when the holding means, such as an IC card, of the payment side person is damaged, the possessor reports both the electronic money value and the identifier which the holding means of the payment side person held to the organ, such as a bank or the Mint Bureau, for providing the holding means and the electronic money values, whereby the possesor can get the organ such as a bank or the Mint Bureau to reissue the funds corresponding to the above-mentioned electronic money value. In addition, with respect to the above-mentioned report, the unjust report by the payment side person can be prevented from being carried out.

In addition, when transferring the electronic money value having the identifier assigned thereto which the holding means of the payment side person holds to the holding means of the reception side person, it is inspected whether or not the person of interest is the possessor of the payment side holding means. Then, when it is judged that the person of interest is the possessor, if the electronic money value is transferred together with the information indicating the above-mentioned possessor, then it can be judged whether or not the electronic money value having the identifier assigned thereto was used by the payment side person himself/herself. Therefore, the unjust report by the payment side person as described above can be prevented from being carried out.

In addition, as set forth hereinabove, according to the present invention, since the holding means can mix the electronic money value having the identifier assigned thereto with the electronic money value having no identifier assigned thereto, by using the electronic money value having the identifier assigned thereto, a utilizer can obtain the guarantee of being able to confirm the electronic money values which the holding means holds irrespective of the state (damage or the like) of the holding means, while by using the electronic money value having no identifier assigned thereto, the utilizer can obtain the anonymousness with which the cash is essentially provided.

## Claims

1. An electronic settlement system including a center apparatus (150) for producing an electronic money value and a reception apparatus (100, 300) for receiving the electronic money value produced by said center apparatus,
wherein said center apparatus comprises:
a controller (151) for producing the electronic money values;
storage means (170) for storing therein one or more groups of electronic money values and identifiers, the electronic money value, out of the produced electronic money values, corresponding to a transmission request issued from said reception apparatus being divided into the one or more groups, the identifiers being uniquely assigned to the groups of electronic money values obtained by the division, respectively; and
communication means (152) for transmitting the electronic money value corresponding to the request issued from said reception apparatus to said reception apparatus.

2. An electronic settlement system according to claim 1, wherein the electronic money value is transmitted together with the identifier assigned thereto to said communication means.

3. An electronic settlement system according to claim 2, wherein said storage means stores therein information relating to whether or not the settlement of the electronic money value is already carried out with respect to each of the electronic money values obtained by the division.

4. An electronic settlement system according to claim 1, wherein when reproducing the electronic money value, an identifier is assigned thereto which has a predetermined relationship with the identifier before the reproduction.

5. An electronic settlement apparatus (150) having control means (151) for producing electronic money values, comprising:
identifier producing means (153) for producing identifiers which correspond uniquely to the electronic money values which have been produced by said control means; and
storage means (170) for storing therein both the produced electronic money values and the identifiers in such a way that the produced electronic money values correspond to the identifiers, respectively.

6. An electronic settlement apparatus according to claim 5, further comprising communication means (152) for transmitting the electronic money value and the identifier stored in said storage means with the electronic money value being made correspond to the identifier to another electronic settlement apparatus.

7. An electronic settlement apparatus according to claim 6, wherein said storage means stores therein information relating to whether or not the settlement of the electronic money value thus transmitted is already completed.

8. An electronic settlement apparatus according to claim 6, wherein said storage means stored therein information for specifying a utilizer, and said communication means transmits, when receiving the information for specifying a utilizer from said another electronic settlement apparatus, the electronic money value to said another electronic settlement apparatus.

9. An electronic settlement apparatus according to claim 8, wherein said communication means transmits the electronic money value which a utilizer can utilize maximumly to said another electronic settlement apparatus.

10. An electronic settlement apparatus according to claim 5, wherein when reproducing the electronic money value which was produced once, an identifier is assigned thereto which has a predetermined relationship with the identifier before the reproduction.

11. An electronic settlement apparatus (100) for receiving an electronic money value, comprising:
input means (103) for inputting information which is obtained through the operation by a utilizer; and
communication means (152) for requesting the electronic money value corresponding to the inputted information obtained by the operation of another electronic settlement apparatus (150) in order to receive one or more electronic money values which are obtained by division and have the identifiers assigned thereto in accordance with the request.

12. An electronic settlement apparatus according to claim 11, further comprising reading means (102) for reading out the storage contents of a storage medium in which information relating to the utilizer is stored,
wherein said communication means issues the request in accordance with both the contents which said reading means has read out and the information which has been inputted through said input means.

13. An electronic settlement apparatus according to claim 11, wherein a reproduced electronic money value which is received by said communication means has the identifier which has a predetermined relationship with the identifier before the reproduction.

14. A storage unit (200) for storing therein an electronic money value which has been produced in an apparatus (150) for producing an electronic money value, comprising:
a first storage area (214) in which information for specifying a utilizer of said storage unit; and
a second storage area (211, 212) in which one or more groups of electronic money values and identifiers are stored, the electronic money value being divided into the one or more groups of electronic money values, the identifiers being assigned uniquely to the groups of electronic money values obtained by the division.

15. A storage unit according to claim 14, wherein the identifiers are assigned in said apparatus for producing an electronic money value and also are stored therein.

16. A storage unit according to claim 14, wherein information which represents, after having transferred the electronic money value obtained by the division to another storage unit, that the transfer has been completed is stored in the second storage area.

17. A storage unit according to claim 14, wherein when transferring the electronic money value to another storage unit, the electronic money value is transferred together with the identifier assigned thereto.

18. A storage unit according to claim 14, wherein the storage contents of the second storage area are printed on said storage unit.

19. For use in an electronic settlement system including a center apparatus (150) for producing an electronic money value and a reception apparatus (100, 300) for receiving the electronic money value produced by said center apparatus, an electronic settlement method comprising the steps of:
assigning an identifier for specifying uniquely the electronic money value to the electronic money value;
storing the electronic money value and the identifier assigned thereto in such a way that the electronic money value is made correspond to the identifier in said center apparatus, and transmitting the electronic money value and the identifier assigned thereto to said reception apparatus; and
transmitting, when having settled the necessary electronic money value thus transmitted, information representing that the settlement has already been carried out to said center apparatus.
